# EUROPEAN PATENT SPECIFICATION

(11) **EP 2 012 535 B1**
(45) Date of publication and mention of the grant of the patent: **14.02.2018**
(21) Application number: 08159653.8
(22) Date of filing: 03.07.2008
(51) Int. Cl.: H04N 5/765, H04N 1/00, H04N 101/00, H04N 5/77

(54) **Direct interface of camera module to general purpose i/o port of digital baseband processor**
Direkte Schnittstelle zwischen einem Kameramodul und einem Allzweck-Ein-/Ausgabetor eines digitalen Basisbandprozessors
Interface directe entre un module de caméra et une porte de communication entrée-sortie à fonction générale d'un processeur de bande de base numérique

(30) Priority: 03.07.2007 US 958143 P
(43) Date of publication of application: 07.01.2009
(73) Proprietor: MediaTek Inc., Hsin-Chu 300 (TW)
(72) Inventor: Aditya, Goswani, Acton, MA 01720 (US); Venkatesh R, Chari, North Andover, MA 01845 (US); Visweswaran, Gowrisankaran Plot No 19, 13 Cross Street, Adambakkam, Chennai -600088 Tamil Nadu (IN)
(74) Representative: Hoefer & Partner Patentanwälte mbB

(56) References cited:
- EP-A1- 1 528 694
- EP-A2- 1 691 272
- CN-A- 1 878 278
- US-A1- 2002 051 074
- US-A1- 2003 011 691
- US-A1- 2005 267 931

## Description

This application claims priority to U.S. provisional application number 60/958,143, filed on July 3, 2007.

### BACKGROUND

This document relates to direct interface of camera module to general purpose I/O port of digital baseband processor.

In some examples, digital baseband processors have general purpose input/output (GPIO) ports that can be configured as inputs or outputs. For example, when a GPIO port is configured as an output, data can be written to a register to control the state driven on the output. When the GPIO port is configured as an input, the state of the input can be detected by reading the state of the register. The GPIO ports on the digital baseband processors may not be designed to receive synchronous parallel data, such as image data generated from a digital camera module. In some examples, a special interface is used on the baseband processor chip, or specialized additional integrated circuits, called back-end chips, companion chips, or coprocessors are used to enable the connection of a camera module to the baseband processor of a mobile handset. US 2002/051074 A1 describes a digital camera with an automatic image transmission function, in which digital image data generated by the result of the process undertaken by an image capturing signal processor is output to a main bus, but not a GPIO port. US 2003/011691 A1 discloses a camera-mounted apparatus with a controller which carries out control of a camera module, wherein a signal processor prohibits writing operation of the image data into a buffer memory while the controller reads out the image data from the buffer memory.
A similar apparatus is disclosed in US 2005/267931 A1. Further CN 1 878 278 A discloses that a camera module can be connected to a digital processor having radio capabilities via a GPIO interface.

### SUMMARY

In a mobile wireless device, a camera module can be connected directly to a baseband processor which does not have a special interface, without the need for an external coprocessor, as disclosed in independent device claim 1 and independent method claim 10. Preferred embodiments are disclosed in the dependent claims.

The data interface of the camera module is directly connected to the pins of a general purpose input/output port on the baseband processor to enable the baseband processor to capture the synchronous parallel data stream from the camera module. A logic circuit external to the baseband processor is utilized in some cases to interface the camera module to the general purpose input/output port of the baseband processor. The general purpose input/output port emulates the functionality of a camera interface by using the clock signal from the camera module to trigger DMA transfers of the data captured by the general purpose input/output port.

In general, in one aspect, a digital baseband processor includes a general purpose input/output port, and a processing unit configured to transfer image data received from a camera module directly connected to the general purpose input/output port through the general purpose input/output port to a memory.

According to the invention, the digital baseband processor includes a processing unit having a DMA controller configured for DMA transfer of image data from the general purpose input/output port to the memory in response to an interrupt signal. The digital baseband processor further includes a logic circuit to generate the interrupt signal in response to synchronizing signals received from the camera module and from the DMA controller. The memory can be external or internal to the digital baseband processor. The processing unit can be configured to supply the image data from the memory for display in a preview mode. The processing unit can be configured to encode the image data for storage in a snapshot mode.

In general, in another aspect, a method is provided for operation of a digital baseband processor. The method includes receiving image data from a camera module through a general purpose input/output port of the digital baseband processor, and transferring the image data from the general purpose input/output port of the digital baseband processor to a memory.

The method according to the invention includes transferring the image data via DMA transfer from the general purpose input/output port to the memory. The method further includes synchronizing the DMA transfer in response to one or more synchronizing signals from the camera module and one or more synchronizing signals from the digital baseband processor. The image data can be transferred to an external memory. The image data can be transferred to an internal memory of the digital baseband processor. The method can include supplying the image data from the memory for display in a preview mode. The method can include encoding the image data for storage in a snapshot mode.

In general, in another aspect, a wireless device includes a digital baseband processor having a general purpose input/output port, a camera module having a camera interface directly connected to the general purpose input/output port of the digital baseband processor, and a memory to store image data, the digital baseband processor including a processing unit to transfer the image data from the general purpose input/output port to the memory.

Implementations of the wireless device may include one or more of the following features. The processing unit can include a DMA controller configured for DMA transfer of the image data from the general purpose input/output port to the memory. The wireless device can include a logic circuit external to the digital baseband processor to synchronize the transfer of image data through the general purpose input/output port. The memory can include a memory external to the digital baseband processor. The memory can include an internal memory of the digital baseband processor. The general purpose input/output port can include a plurality of independently-controllable input/output lines of the digital baseband processor.

In general, in another aspect, an integrated circuit includes a general purpose input/output port and a controller, the controller controls transfer of data from the general purpose input/output port to a memory in response to an interrupt signal. A logic circuit external to the integrated circuit generates the interrupt signal in response to synchronizing signals that synchronize data sent to the general purpose input/output port from a data module external to the integrated circuit. The logic circuit has logic to clear the interrupt signal in response to a signal from the integrated circuit indicating that the controller has initiated a transfer of data from the general purpose input/output port to the memory.

Implementations may include one or more of the following features. The logic circuit can cause the interrupt signal to be at a first logic level when triggered by each of the synchronizing signals, and can cause the interrupt signal to be at a second logic level upon receipt of the signal indicating that the controller has initiated the transfer of data. The controller can include a direct memory access controller. The general purpose input/output port can include a plurality of independently-controllable input/output lines, and the synchronized data can include synchronized parallel data. The integrated circuit by itself, without the logic circuit, may not be configured to receive synchronous data at the general purpose input/output port. The integrated circuit can include a digital baseband processor to process wireless telecommunications signals. The integrated circuit can include a processor that executes an operating system to schedule execution of applications to prevent interference with the transfer of data from the general purpose input/output port to the memory. The signal indicating that the controller has initiated a transfer of data can include a bus grant signal indicating that a bus has been granted to the controller to enable the controller to initiate the transfer of data to the memory. The integrated circuit can include a level triggered interrupt input to receive the interrupt signal, and the controller can repeatedly transfer data from the general purpose input/output port to the memory when the interrupt signal is maintained at a first level. The logic circuit can clear the interrupt signal by setting the interrupt signal to a second level. The data module can include a digital camera module, and the synchronized data can include image data.

In general, in another aspect, synchronized data that are synchronized to a clock signal are generated using a data module, the synchronized data from the data module are received at a general purpose input/output port of an integrated circuit, the synchronized data are transferred from the general purpose input/output port to a memory in response to an interrupt signal, the interrupt signal is generated using a logic circuit external to the integrated circuit in response to the clock signal, a signal indicating that a transfer of data from the general purpose input/output port to the memory has been initiated is generated using the integrated circuit, and the interrupt signal is cleared using the logic circuit in response to the signal indicating that a transfer of data from the general purpose input/output port to the memory has been initiated.

Implementations may include one or more of the following features. Receiving synchronized data at the general purpose input/output port can include receiving parallel synchronized data at a plurality of independently-controllable input/output lines of the general purpose input/output port. Generating synchronized data using the data module can include generating image data using a digital camera module. Generating the interrupt signal can include generating the interrupt signal based on the clock signal only when a horizontal reference signal indicates that the digital camera module is outputting valid image data. The interrupt signal is received at a level triggered interrupt input of the integrated circuit.

In general, in another aspect, synchronous parallel data are transferred to a general purpose input/output (GPIO) port of an integrated circuit that is not configured to receive synchronous parallel data at the GPIO port. An interrupt signal used to trigger transfer of the synchronous parallel data from the GPIO port to a memory is controlled using a logic circuit external to the integrated circuit such that not more than a single transfer from the GPIO port to the memory occurs for each cycle of a clock signal used to synchronize the parallel data. The controlling of the interrupt signal is based on the clock signal and a signal from the integrated circuit indicating that a transfer of data from the GPIO port to the memory has been initiated.

Implementations may include one or more of the following features. Receiving the synchronized parallel data at the GPIO port can include receiving synchronized parallel data at a plurality of independently-controllable input/output lines of the GPIO port. The synchronized parallel data can be generated using a digital camera module, and the parallel data can include image data. The interrupt signal can be received at a level triggered interrupt input of the integrated circuit.

These and other aspects and features, and combinations of them, may be expressed as methods, apparatus, systems, means for performing functions, and in other ways.

Advantages of the digital baseband processor, method, aspects and features described above can include one or more of the following. A digital baseband processor having a GPIO port not designed to receive synchronous parallel data can receive synchronous image data from a digital camera module using a simple logic circuit, reducing the cost of integrating a camera module in a cell phone. An integrated circuit having a GPIO port not designed to receive synchronous parallel data can receive synchronous data using a simple external logic circuit. This allows the integrated circuit to be easily integrated with data modules, such as digital camera modules, that generate synchronous parallel data.

### DESCRIPTION OF DRAWINGS

FIG. 1 is a block diagram of a wireless device in which a camera module is directly interfaced to a general purpose input/output port of a digital baseband processor.
FIG. 2 is a block diagram of a digital baseband processor.
FIG. 3 is a block diagram that illustrates data flow in a preview mode of the wireless device of FIG. 1.
FIG. 4 is a block diagram that illustrates data flow in a snapshot mode of the wireless device of FIG. 1.

### DESCRIPTION

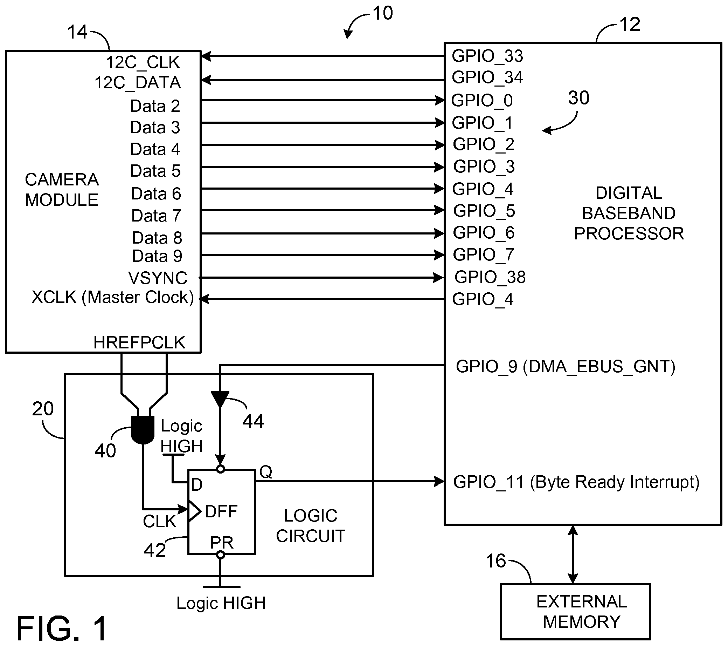

Referring to FIG. 1, in some implementations, a mobile wireless device 10 includes a digital baseband processor 12, a camera module 14 and an external memory 16 to store image data acquired by camera module 14. The wireless device 10 may include a logic circuit 20 to assist in synchronizing the transfer of image data from camera module 14 to the digital baseband processor 12. The logic circuit 20 may not be required for certain camera module types. In some examples, image data may be stored in an on-chip memory of digital baseband processor 12.

The camera module 14 is directly connected to a general purpose input/output (GPIO) port 30 of digital baseband processor 12. The general purpose input/output port 30 includes multiple independent, separately-controllable lines which can be used for input to or output from digital baseband processor 12. The configuration of FIG. 1 allows the camera module 14 to be used in the wireless device 10 without the need for a separate coprocessor to supplement the digital baseband processor 12 and without the need for a special purpose camera interface on the digital baseband processor 12.

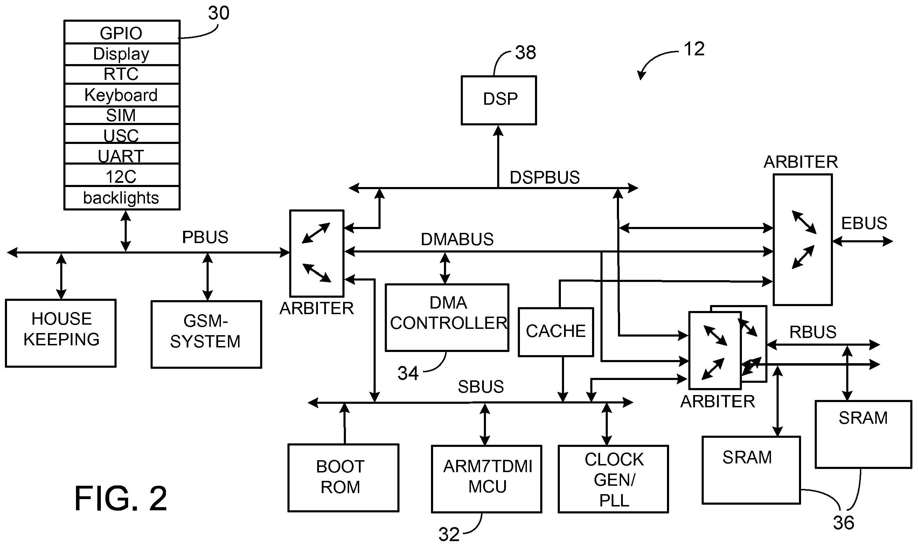

Referring to FIG. 2, in some implementations, the digital baseband processor 12 may include a processor 32, such as a microcontroller (MCU), a direct memory access (DMA) controller 34, an internal memory 36 and a digital signal processor 38. The components of the digital baseband processor 12 are interconnected by internal buses, including a peripheral bus (PBUS), a DMA bus (DMABUS), an external bus (EBUS), a system bus (SBUS), and a random access memory bus (RBUS). The DMA controller 34 transfers image data from GPIO port 30 via PBUS, DMABUS and EBUS to the external memory 16 or via PBUS, DMABUS and RBUS to the internal memory 36. The digital baseband processor 12 may include additional components.

Interface signals of the camera module 14 may include a vertical synchronization signal VSYNC, a horizontal synchronization signal HREF, a pixel clock PCLK, and eight data lines, Data 2 through Data 9, for transfer of one byte of image data per pixel clock cycle. In some implementations, there may be 10 data lines or some other number of data lines. The interface signals also include signals supplied to the camera module 14 by the digital baseband processor 12. An industry standard serial interface, called the I2C interface, includes a clock signal I2C_CLK and a serial data signal I2C_DATA. The I2C serial interface may be used for configuration and control of camera module 14, e.g., setting resolution and image format, etc. The baseband processor 12 also supplies a clock XCLK (master clock) to camera module 14. The clock XCLK is the clock for operation of camera module 14, and the pixel clock PCLK is derived from clock XCLK by the camera module 14.

As shown in FIG. 1, the horizontal synchronization signal HREF and the pixel clock PCLK are supplied to the logic circuit 20. The digital baseband processor 12 supplies a DMA bus grant signal DMA_EBUS_GNT to the logic circuit 20. The logic circuit 20 supplies a Byte Ready Interrupt signal to the baseband processor 12.

In the example of FIG. 1, valid video or image data are streamed by the camera module 14 during the intervals when the vertical sync signal VSYNC is low and the horizontal sync signal HREF is high. The data changes on the data lines with the active positive edge of the pixel clock PCLK.

The eight data lines of the camera module 14, Data 2 through Data 9, connect with eight contiguous lines of the general purpose input/output port 30 pins to avoid extra software overhead to rearrange the byte and to insure a single DMA transfer per byte of valid pixel data. Since the pixel clock of camera module 14 is continuous, even during horizontal and vertical blanking periods, the digital baseband processor 12 is interrupted only during valid video data pixel clock intervals. To achieve this, the pixel clock PCLK is gated with the horizontal sync signal HREF. Some camera modules provide a gated horizontal sync signal HREF and thus do not require gating. The digital baseband processor 12 is interrupted once for every valid pixel clock edge. Upon receiving the interrupt, the DMA controller 34 in the digital baseband processor 12 reads the byte from the general purpose input/output port 30 and stores it in external memory 16.

Level triggered GPIO interrupts on the digital baseband processor 12 are wired to the interrupt controller of the DMA controller 34. Resetting the level of the external interrupt resets the interrupt to the system DMA controller and does not require software intervention to clear the interrupt status flag on every pixel clock edge. The logic circuit 20 is used to implement this operation.

As shown in FIG. 1, the logic circuit 20 includes an AND logic gate 40 having its output connected to the clock input of a positive-edge triggered D flipflop 42. An inverter logic gate 44 has its output connected to the clear input of flipflop 42. The pixel clock PCLK is gated with the horizontal sync signal HREF by logic gate 40 so that the D flipflop 42 is triggered only during valid data periods. The camera module 14 is configured for an active positive edge of the pixel clock PCLK. For those camera modules that provide a gated horizontal sync signal HREF, the AND logic gate 40 is not used.

At the positive edge of the pixel clock, a positive edge is available at the Q output of D flipflop 42. The output of the D flipflop provides a level-triggered interrupt to the digital baseband processor 12 and is used to trigger the system DMA controller 34 of the digital baseband processor 12. The system DMA controller 34 services the interrupt and reads the data byte from the data lines of the general purpose input/output port 30. When access to an internal bus EBUS is granted, the bus grant signal DMA_EBUS_GNT is sent through inverter logic gate 44 to the asynchronous clear input of flipflop 42, which immediately clears the level-triggered interrupt source. This insures that the interrupt is cleared the first time that the byte is read and written into system memory. This prevents the same data byte from being read multiple times (which may occur if the interrupt is not cleared).

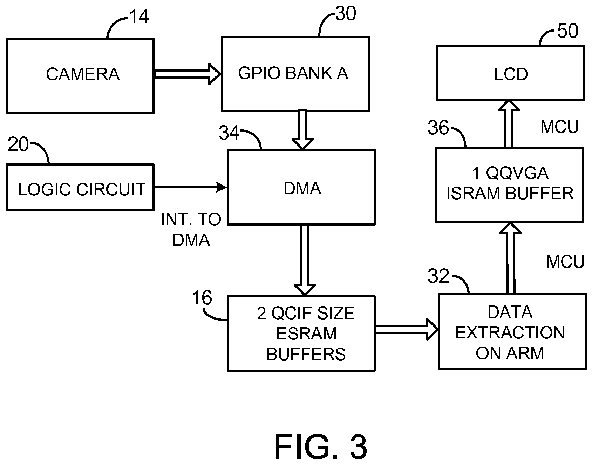

FIG. 3 is a block diagram that illustrates data flow in a preview mode of the camera module 14 in the wireless device 10 of FIG. 1. During preview mode, the user previews an object in front of the camera module 14 on a display screen of the wireless device 10. The camera module 14 may be configured to stream a QCIF/QQVGA image with RGB565 data format. An arbitrary size and format may be configured in general. At every level-triggered interrupt, the DMA controller 34 reads a byte from GPIO port 30 and transfers the byte to external memory 16. Since the camera module 14 sends out the RG byte first, followed by the GB byte for each pixel, the pixel halfword is swapped in memory. The processor 32 reorders the bytes and stores a display ready QQVGA frame in internal memory 36 of digital baseband processor 12. The processor 32 then writes the image frame to a display 50 of the wireless device 10.

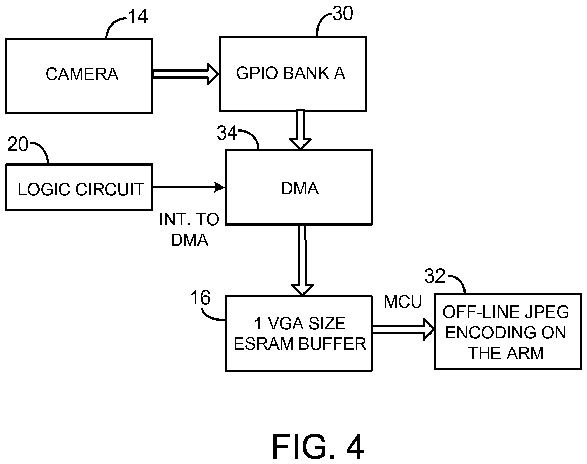

FIG. 4 is a block diagram that illustrates data flow in a snapshot mode of the camera module 14 in the wireless device 10 of FIG. 1. In the snapshot mode, the user presses a key on the wireless device 10 and captures a single VGA-sized snapshot or image. The camera module 14 may be configured to stream a VGA image in YUV422 data format. At every level-triggered interrupt, the DMA controller 34 reads a byte from the GPIO port 30 and transfers the byte to the external memory 16. The byte swap does not occur in the case of snapshot mode, since the required operations on the image data are offline processing operations. Offline JPEG encoding is performed by processor 32.

Although various implementations have been described, other implementations are within the scope of the following claims. For example, using the logic circuit 20 to enable an integrated circuit having a GPIO port to directly receive synchronous parallel data is not limited to enabling a digital baseband processor to directly receive image data from a digital camera module in a wireless device. The device 10 can be a wired device. The digital baseband processor can be replaced by other integrated circuits, and does not necessarily have to process baseband signals. The module 14 can be replaced by other data modules that generate synchronous parallel data, and does not necessarily have to be generate image data. The logic circuit 20 can use other types of logic devices different from those shown in FIG. 1.

## Claims

1. A wireless device (10) comprising:
a digital baseband processor (12) having a general purpose input/output port (30, GPIO) not designed to receive synchronous parallel data;
a camera module (14) having a data interface directly connected to the general purpose input/output port of the digital baseband processor and configured to output a synchronous parallel data stream to the data interface; a logic circuit (20) connected to the general purpose input/output port of the digital baseband processor and the camera module and configured for: receiving a horizontal synchronisation signal (HREF) and a pixel clock signal (PCLK) from the camera module and a direct memory access grant signal (DMA_EBUS_GNT) from the digital baseband processor, generating an interrupt signal ("Byte Ready Interrupt") in response to the signals from the camera module and the digital baseband processor and providing the interrupt signal to the digital baseband processor to synchronize the transfer of the synchronous parallel data through the general purpose input/output port, wherein the general purpose input/output port comprises a plurality of independently-controllable input/output lines, the wireless device further comprising:
a memory (16) to store the synchronous parallel data, the digital baseband processor including a processing unit having a direct memory access (DMA) controller (34) configured for DMA transfer of the synchronous parallel data from the general purpose input/output port to the memory in response to the interrupt signal.

2. The wireless device of claim 1, wherein the synchronous parallel data includes image data.

3. The wireless device of claim 1, wherein the memory comprises a memory external to the digital baseband processor.

4. The wireless device of claim 1, wherein the memory comprises an internal memory of the digital baseband processor.

5. The wireless device of claim 1 wherein the logic circuit having logic to clear the interrupt signal in response to the signal from the digital baseband processor indicating that the controller has initiated a transfer of data from the general purpose input/output to the memory.

6. The wireless device of claim 5 in which the logic circuit causes the interrupt signal to be at a first logic level when triggered by each of the synchronizing signals, and the logic circuit causes the interrupt signal to be at a second logic level upon receipt of the signal indicating that the controller has initiated the transfer of data.

7. The wireless device of claim 5 in which the synchronized data comprise synchronized parallel data including image data.

8. The wireless device of claim 5 in which the digital baseband processor executes an operating system to schedule execution of applications to prevent interference with the transfer of data from the general purpose input/output port to the memory.

9. The wireless device of claim 5, wherein the logic circuit comprises a D flipflop (42) whose output provides a level-triggered interrupt to the digital baseband processor (12) and is used to trigger the system direct memory access controller (34) of the digital baseband processor.

10. A method for operation of a digital baseband processor (12), comprising the steps of:
receiving a synchronous parallel data stream from a camera module (14) through a general purpose input/output port (30, GPIO) of the digital baseband processor, wherein the general purpose input/output port is not designed to receive synchronous parallel data; synchronizing the transfer of the synchronous parallel data through the general purpose input/output port by a logic circuit (20) external to the digital baseband processor, wherein the logic circuit receives a horizontal synchronisation signal (HREF) and a pixel clock signal (PCLK) from the camera module and a direct memory access grant signal (DMA_EBUS_GNT) from the digital baseband processor, generates an interrupt signal in response to the signals from the digital baseband processor and the camera module and
provides the interrupt signal to the digital baseband processor; wherein the general purpose input/output port comprises a plurality of independently-controllable input/output lines, and under the control of a direct memory access (DMA) controller (34), transferring the the synchronous parallel data from the general purpose input/output port of the digital baseband processor to a memory (16) in response to the interrupt signal.

11. The method of claim 10, wherein the synchronous parallel data includes the image data.

12. The method of claim 10, further comprising:
transferring the synchronized data from the general purpose input/output port to a memory in response to the interrupt signal;
generating, using the logic circuit, the interrupt signal in response to a clock signal; generating, using the digital baseband processor, the signal indicating that a transfer of data from the general purpose input/output port to the memory has been initiated; and
clearing, using the logic circuit, the interrupt signal in response to the signal indicating that a transfer of data from the general purpose input/output port to the memory has been initiated.

13. The method of claim 12 wherein:
not more than a single transfer from the general purpose input/output port to the memory occurs for each cycle of the clock signal.

## Patentansprüche

1. Funkvorrichtung (10), aufweisend:
einen digitalen Basisbandprozessor (12), welcher einen universellen Eingabe-/Ausgabeanschluss (30, GPIO) aufweist, welcher nicht zum Empfangen synchroner paralleler Daten konzipiert ist;
ein Kameramodul (14), welches eine Datenschnittstelle aufweist, die mit dem universellen Eingabe-/Ausgabeanschluss des digitalen Basisbandprozessors direkt verbunden ist und zum Ausgeben eines synchronen parallelen Datenstroms an die Datenschnittstelle konfiguriert ist;
eine Logikschaltung (20), welche mit dem universellen Eingabe-/Ausgabeanschluss des digitalen Basisbandprozessors und dem Kameramodul verbunden ist und konfiguriert ist, um: ein horizontales Synchronisationssignal (HREF) und ein Pixeltaktsignal (PCLK) von dem Kameramodul und ein Direktspeicher-Zugriffsgewährungssignal (DMA_EBUS_GNT) von dem digitalen Basisbandprozessor zu empfangen, ein Unterbrechungssignal ("Byte Ready Interrupt") in Reaktion auf die Signale von dem Kameramodul und dem digitalen Basisbandprozessor zu erzeugen und dem digitalen Basisbandprozessor das Unterbrechungssignal bereitzustellen, um die Übertragung der synchronen parallelen Daten durch den universellen Eingabe-/Ausgabeanschluss zu synchronisieren, wobei der universelle Eingabe-/Ausgabeanschluss eine Mehrzahl von unabhängig steuerbaren Eingabe/-Ausgabeleitungen umfasst, wobei die Funkvorrichtung ferner aufweist:
einen Speicher (16), um die synchronen parallelen Daten zu speichern, wobei der digitale Basisbandprozessor eine Verarbeitungseinheit aufweist, welche eine Direktspeicherzugriff- (DMA) Steuereinheit (34) aufweist, welche für die DMA-Übertragung der synchronen parallelen Daten von dem universellen Eingabe-/Ausgabeanschluss zum Speicher in Reaktion auf das Unterbrechungssignal konfiguriert ist.

2. Funkvorrichtung nach Anspruch 1, wobei die synchronen parallelen Daten Bilddaten umfassen.

3. Funkvorrichtung nach Anspruch 1, wobei der Speicher einen Speicher außerhalb des digitalen Basisbandprozessors aufweist.

4. Funkvorrichtung nach Anspruch 1, wobei der Speicher einen internen Speicher des digitalen Basisbandprozessors aufweist.

5. Funkvorrichtung nach Anspruch 1, wobei die Logikschaltung Logik aufweist, um das Unterbrechungssignal in Reaktion auf das Signal von dem digitalen Basisbandprozessor zu löschen, welches anzeigt, dass die Steuereinheit eine Übertragung von Daten von der universellen Eingabe/Ausgabe zum Speicher eingeleitet hat.

6. Funkvorrichtung nach Anspruch 5, in welcher die Logikschaltung bewirkt, dass das Unterbrechungssignal auf einer ersten Logikstufe ist, wenn es von jedem der Synchronisationssignalen ausgelöst wird, und die Logikschaltung bewirkt, dass das Unterbrechungssignal beim Empfang des Signals, welches anzeigt, dass die Steuereinheit die Übertragung von Daten eingeleitet hat, auf einer zweiten Logikstufe ist.

7. Funkvorrichtung nach Anspruch 5, in welcher die synchronisierten Daten Bilddaten umfassende synchronisierte parallele Daten aufweisen.

8. Funkvorrichtung nach Anspruch 5, in welcher der digitale Basisbandprozessor ein Betriebssystem ausführt, um Ausführung von Anwendungen zu terminieren, um Interferenz mit der Übertragung von Daten von dem universellen Eingabe-/Ausgabeanschluss zum Speicher zu verhindern.

9. Funkvorrichtung nach Anspruch 5, wobei die Logikschaltung einen D-Flipflop (42) aufweist, dessen Ausgabe dem digitalen Basisbandprozessor (12) einen stufenausgelösten Interrupt bereitstellt und verwendet wird, um die Direktspeicherzugriff-Steuereinheit (34) des digitalen Basisbandprozessors auszulösen.

10. Verfahren für den Betrieb eines digitalen Basisbandprozessors (12), welches die Schritte aufweist:
Empfangen eines synchronen parallelen Datenstroms von einem Kameramodul (14) durch einen universellen Eingabe-/Ausgabeanschluss (30, GPIO) des digitalen Basisbandprozessors, wobei der universelle Eingabe-/Ausgabeanschluss nicht zum Empfangen synchroner paralleler Daten konzipiert ist;
Synchronisieren der Übertragung der synchronen parallelen Daten durch den universellen Eingabe-/Ausgabeanschluss durch eine Logikschaltung (20), welche außerhalb des digitalen Basisbandprozessors ist, wobei die Logikschaltung ein horizontales Synchronisationssignal (HREF) und ein Pixeltaktsignal (PCLK) von dem Kameramodul und ein Direktspeicher-Zugriffsgewährungssignal (DMA_EBUS_GNT) von dem digitalen Basisbandprozessor empfängt, ein Unterbrechungssignal in Reaktion auf die Signale von dem digitalen Basisbandprozessor und dem Kameramodul erzeugt und dem digitalen Basisbandprozessor das Unterbrechungssignal bereitstellt; wobei der universelle Eingabe-/Ausgabeanschluss eine Mehrzahl von unabhängig steuerbaren Eingabe-/Ausgabeleitungen aufweist und,
unter der Steuerung einer Direktspeicherzugriff- (DMA) Steuereinheit (34), Übertragen der synchronen parallelen Daten von dem universellen Eingabe-/Ausgabeanschluss des digitalen Basisbandprozessors zu einem Speicher (16) in Reaktion auf das Unterbrechungssignal.

11. Verfahren nach Anspruch 10, wobei die synchronen parallelen Daten die Bilddaten umfassen.

12. Verfahren nach Anspruch 10, welches ferner aufweist:
Übertragen der synchronisierten Daten von dem universellen Eingabe-/Ausgabeanschluss zu einem Speicher in Reaktion auf das Unterbrechungssignal;
Erzeugen des Unterbrechungssignals in Reaktion auf ein Taktsignal unter Verwendung der Logikschaltung;
Erzeugen des Signals, welches anzeigt, dass eine Übertragung von Daten von dem universellen Eingabe-/Ausgabeanschluss zum Speicher eingeleitet wurde, unter Verwendung des digitalen Basisbandprozessors; und
Löschen des Unterbrechungssignals in Reaktion auf das Signal, welches anzeigt, dass eine Übertragung von Daten von dem universellen Eingabe-/Ausgabeanschluss zum Speicher eingeleitet wurde, unter Verwendung der Logikschaltung.

13. Verfahren nach Anspruch 12, wobei:
für jeden Zyklus des Taktsignals nicht mehr als eine einzige Übertragung von dem universellen Eingabe-/Ausgabeanschluss zum Speicher stattfindet.

## Revendications

1. Dispositif sans fil (10) comprenant:
un processeur de bande de base numérique (12) ayant un port d'entrée/sortie à usage général (30, GPIO) ne visant pas à recevoir des données parallèles synchrones;
un module de caméra (14) ayant une interface de données connectée directement au port d'entrée/sortie à usage général du processeur de bande de base numérique et configuré pour délivrer en sortie un flux de données parallèles synchrones à l'interface de données;
un circuit logique (20) connecté au port d'entrée/sortie à usage général du processeur de bande de base numérique et au module de caméra et configuré:
pour recevoir un signal de synchronisation horizontal (HREF) et un signal d'horloge de pixel (PCLK) provenant du module de caméra et un signal d'autorisation d'accès direct à la mémoire (DMA_EBUS_GNT) provenant du processeur de bande de base numérique,
pour générer un signal d'interruption ("Byte Ready Interrupt") en réponse aux signaux provenant du module de caméra et du processeur de bande de base numérique et
pour fournir le signal d'interruption au processeur de bande de base numérique pour synchroniser le transfert des données parallèles synchrones à travers le port d'entrée/sortie à usage général,
dans lequel le port d'entrée/sortie à usage général comprend une pluralité de lignes d'entrée/sortie pouvant être commandées indépendamment,
le dispositif sans fil comprenant en outre:
une mémoire (16) pour stocker les données parallèles synchrones,
le processeur de bande de base numérique comportant une unité de traitement ayant un dispositif de commande (34) d'accès direct à la mémoire (DMA) configuré pour le transfert DMA des données parallèles synchrones du port d'entrée/sortie à usage général vers la mémoire en réponse au signal d'interruption.

2. Dispositif sans fil selon la revendication 1, dans lequel les données parallèles synchrones comportent des données d'image.

3. Dispositif sans fil selon la revendication 1, dans lequel la mémoire comprend une mémoire externe au processeur de bande de base numérique.

4. Dispositif sans fil selon la revendication 1, dans lequel la mémoire comprend une mémoire interne du processeur de bande de base numérique.

5. Dispositif sans fil selon la revendication 1, dans lequel le circuit logique ayant une logique pour effacer le signal d'interruption en réponse au signal provenant du processeur de bande de base numérique indiquant que le dispositif de commande a initié un transfert de données du port d'entrée/sortie à usage général vers la mémoire.

6. Dispositif sans fil selon la revendication 5, dans lequel le circuit logique amène le signal d'interruption à être à un premier niveau logique lorsqu'il est déclenché par chacun des signaux de synchronisation, et le circuit logique amène le signal d'interruption à être à un deuxième niveau logique à la réception du signal indiquant que le dispositif de commande a initié le transfert de données.

7. Dispositif sans fil selon la revendication 5, dans lequel les données synchronisées comprennent des données parallèles synchronisées comportant des données d'image.

8. Dispositif sans fil selon la revendication 5, dans lequel le processeur de bande de base numérique exécute un système d'exploitation pour programmer l'exécution d'applications pour empêcher une interférence avec le transfert de données du port d'entrée/sortie à usage général vers la mémoire.

9. Dispositif sans fil selon la revendication 5, dans lequel le circuit logique comprend une bascule bistable D (42) dont la sortie fournit une interruption déclenchée par niveau au processeur de bande de base numérique (12) et est utilisée pour déclencher le dispositif de commande (34) d'accès direct à la mémoire système du processeur de bande de base numérique.

10. Procédé de fonctionnement d'un processeur de bande de base numérique (12), comprenant les étapes de:
recevoir un flux de données parallèle synchrones provenant d'un module de caméra (14) à travers un port d'entrée/sortie à usage général (30, GPIO) du processeur de bande de base numérique, où le port d'entrée/sortie à usage général n'est pas conçu pour recevoir des données parallèles synchrones;
synchroniser le transfert des données parallèles synchrones à travers le port d'entrée/sortie à usage général par un circuit logique (20) externe au processeur de bande de base numérique,
dans lequel le circuit logique reçoit un signal de synchronisation horizontale (HREF) et un signal d'horloge de pixel (PCLK) provenant du module de caméra et un signal d'autorisation d'accès direct à la mémoire (DMA_EBUS_GNT) provenant du processeur de bande de base numérique, génère un signal d'interruption en réponse aux signaux provenant du processeur de bande de base numérique et du module de caméra et fournit le signal d'interruption au processeur de bande de base numérique;
dans lequel le port d'entrée/sortie à usage général comprend une pluralité de lignes d'entrée/sortie pouvant être commandées indépendamment,
et
transférer, sous la commande d'un dispositif de commande (34) d'accès direct à la mémoire (DMA), les données parallèles synchrones du port d'entrée/sortie à usage général du processeur de bande de base numérique vers une mémoire (16) en réponse au signal d'interruption.

11. Procédé selon la revendication 10, dans lequel les données parallèles synchrones comportent les données d'image.

12. Procédé selon la revendication 10, comprenant en outre:
transférer les données synchronisées du port d'entrée/sortie à usage général vers une mémoire en réponse au signal d'interruption;
générer, en utilisant le circuit logique, le signal d'interruption en réponse à un signal d'horloge;
générer, en utilisant le processeur de bande de base numérique, le signal indiquant qu'un transfert de données du port d'entrée/sortie à usage général vers la mémoire a été initié; et
effacer, en utilisant le circuit logique, le signal d'interruption en réponse au signal indiquant qu'un transfert de données du port d'entrée/sortie à usage général vers la mémoire a été initié.

13. Procédé selon la revendication 12 dans lequel:
pas plus d'un seul transfert du port d'entrée/sortie à usage général vers la mémoire n'a lieu pour chaque cycle du signal d'horloge.
